# EUROPÄISCHE PATENTANMELDUNG

(11) **EP 2 944 570 A1**
(43) Veröffentlichungstag der Anmeldung: **18.11.2015**
(21) Anmeldenummer: 14405043.2
(22) Anmeldetag: 14.05.2014
(51) Int. Cl.: B64D 11/06

(54) **Liege zum Einsatz in einem Flugzeug**

(71) Anmelder: Lantal Textiles AG, 4900 Langenthal (CH)
(72) Erfinder: von Ballmoos, Roland, 8703 Erlenbach (CH); Riner, Harald, 5712 Beinwil (CH)
(74) Vertreter: Kessler, Stephan

(57) **Zusammenfassung**

Die vorliegende Anmeldung betrifft eine Liege zum Einsatz in einem Flugzeug mit einer Liegefläche (2) sowie wenigstens ein im aufgeblasenen Zustand keilförmiges erstes pneumatisches Kissen (3). Das mindestens eine erste pneumatische Kissen (3) wirkt auf zumindest einen Teilbereich der Liegefläche (2) ein. Die Liege (1) weist ferner eine Steuerungseinheit (5) auf, mit der das wenigstens eine erste pneumatische Kissen (3) aufblasbar und entleerbar ist.

## Beschreibung

### Technisches Gebiet

Die Erfindung betrifft eine Liege zum Einsatz in einem Flugzeug bei dem mindestens ein pneumatisches Kissen auf einen Teil einer Liegefläche einwirkt.

### Stand der Technik

Nebst dem Einbau von Sitzen ist im Flugzeugbau auch der Einbau von Liegen, wie z.B. einem Bett, bekannt, insbesondere bei Privatmaschinen oder in Kabinen der oberen Buchungsklassen. Eine Besonderheit für den Einsatz von Liegen in Flugzeugen ist der sich je nach Flugphase verändernde Anstellwinkel des Flugzeugs, der sich negativ auf den Liegekomfort eines Benutzers einer Liege auswirken kann.

Insbesondere im Bereich der Fahrzeugsitze sind adaptive Sitzflächen bekannt, welche eine Anpassung der Sitzfläche ermöglichen. Beispielsweise offenbart die DE 10 2008 030 102 (Faurecia Autositze GmbH) eine Vorrichtung zur Verstellung von Komponenten eines Fahrzeugsitzes mit einer Spreizvorrichtung. Durch die Spreizvorrichtung ist eine Komponente oder ein Teil einer Komponente des Fahrzeugsitzes in eine Funktionsstellung aufklappbar oder auffaltbar. Die Spreizvorrichtung umfasst einen aufblasbaren Hohlkörper, der in der Form eines Keils ausgebildet ist, wobei die zwei Seitenflächen, welche voneinander gespreizt werden, aus plattenförmigen Bauelementen und die weiteren, den Hohlraum umgebenden Seitenwände aus einem nachgiebigen oder faltbaren Material bestehen. Die zu verstellenden Komponenten oder Komponentteile des Fahrzeugsitzes werden durch eines der plattenförmigen Bauelemente beaufschlagt. Die Bedienung der Spreizvorrichtung erfolgt durch einen Benutzer über einen Druckknopf.

### Darstellung der Erfindung

Aufgabe der Erfindung ist es, eine dem eingangs genannten technischen Gebiet zugehörende Liege zum Einsatz in einem Flugzeug zu schaffen, welche eine einfache Verstellung zumindest eines Teils einer Liegefläche ermöglicht, um die negativen Auswirkungen des Anstellwinkels des Flugzeugs auf den Liegekomfort möglichst gering zu halten.

Die Lösung der Aufgabe ist durch die Merkmale des Anspruchs 1 definiert. Gemäss der Erfindung umfasst die erfindungsgemässe Liege zum Einsatz in einem Flugzeug eine Liegefläche sowie mindestens ein im aufgeblasenen Zustand keilförmiges, erstes pneumatisches Kissen. Das mindestens eine erste pneumatische Kissen wirkt auf zumindest einen Teilbereich der Liegefläche ein. Ferner umfasst die Liege eine Steuerungseinheit, mit der das wenigstens eine erste pneumatische Kissen aufblasbar und entleerbar ist.

Durch das Aufblasen und Entleeren des wenigstens einen keilförmigen pneumatischen Kissens, welches auf die Liegefläche einwirkt, kann der Anstellwinkel des Flugzeugs kompensiert werden, d.h. trotz eines Anstellwinkels kann die Liegefläche im Wesentlichen in eine horizontale Lage gebracht werden. Dadurch lässt sich für einen Benutzer in jeder Fluglage eine angenehme Liegeposition einstellen. Durch die vorhandene Steuerungseinheit kann das Aufblasen und Entleeren des mindestens einen pneumatischen Kissens vorzugsweise automatisch erfolgen, d.h. das Einstellen einer im Wesentlichen horizontalen Ausrichtung der Liegefläche kann unabhängig von einer Benutzerhandlung erfolgen.

Die erfindungsgemässe Liege ist zum Einsatz in einem Flugzeug vorgesehen, d.h. die Liege verfügt über einen Unterbau, welches eine sichere Verankerung auf einem Kabinenboden ermöglicht. Zudem ist die Liege vorzugsweise aus leichtgewichtigen Materialien aufgebaut, wie beispielsweise Karbonfasern oder Aluminium.

Als "pneumatisches Kissen" wird eine von einem flächigen Material umschlossene Kammer verstanden, welche mit einem Fluid, insbesondere mit Luft, aufgeblasen werden kann. Dementsprechend lässt sich das Volumen eines pneumatischen Kissens durch Variation der eingefüllten Menge an Fluid verändern. Insbesondere bevorzugt kann das wenigstens eine pneumatische Kissen bei der erfindungsgemässen Liege durch aktives Aufblasen und Entleeren in seinem Volumen verändert werden.

Zum Aufblasen und Entleeren verfügt das mindestens eine erste pneumatische Kissen über mindestens eine entsprechende erste Zuleitung, mit der der Innenraum des ersten pneumatischen Kissens in fluidische Verbindung mit einem Druckluftsystem gebracht werden kann. Vorzugsweise verfügt diese erste Zuleitung über mindestens ein erstes Ventil, welches ein Verschliessen der Zuleitung ermöglicht. Weiter bevorzugt verfügt die wenigstens eine erste Zuleitung oder das mindestens eine erste pneumatische Kissen über ein zweites Ventil und/oder über eine zweite Zuleitung, welche eine fluidische Verbindung des Innenraums des mindestens einen pneumatischen Kissens mit der umgebenden Atmosphäre oder einem Unterdrucksystem ermöglicht.

Bevorzugt ist das mindestens eine pneumatische Kissen fluidisch mit einer Pumpe verbunden. Die Pumpe ist besonders bevorzugt derart ausgestaltet, dass diese das Fluid sowohl in das mindestens eine pneumatische Kissen hinein- sowie hinauspumpen kann, d.h. mit einer einzigen Pumpe kann das mindestens eine pneumatische Kissen sowohl aufgeblasen wie auch entleert werden. Dies vereinfacht den Aufbau der erfindungsgemässen Liege.

Das mindestens eine erste pneumatische Kissen ist "keilförmig". Im Rahmen der vorliegenden Anmeldung wird darunter verstanden, dass das mindestens eine erste pneumatische Kissen im aufgeblasenen Zustand zwei im spitzen Winkel zueinander zulaufende Flächen aufweist. Durch das Einwirken des mindestens einen ersten pneumatischen Kissens auf zumindest einen Bereich der Liegefläche kann dieser Bereich durch das Aufblasen des mindestens einen ersten pneumatischen Kissens angehoben werden, um den Anstellungswinkel des Flugzeugs zu kompensieren. Durch Entleeren des mindestens einen ersten pneumatischen Kissens kann entsprechend der zumindest eine Teilbereich der Liegefläche wieder abgesenkt werden.

Die Steuerungseinheit verfügt vorzugsweise über eine elektronische Steuerung, beispielsweise in der Form eines Mikroprozessors, welche das Ansteuern der Ventile in der oder den Zuleitung(en) ermöglicht, um diese zu öffnen beziehungsweise zu schliessen. Besonders bevorzugt umfasst die Steuerungseinheit die entsprechenden Ventile für die erste Zuleitung beziehungsweise die Zuleitungen.

Vorzugsweise kann ein Benutzer über entsprechende Bedienelemente, wie beispielsweise Knöpfe, Schalter oder dergleichen das Aufblasen beziehungsweise Entleeren des mindestens einen pneumatischen Kissens steuern.

Bevorzugt verfügt die Steuerungseinheit über mindestens einen Neigungssensor und ist derart konfiguriert, dass das wenigstens eine pneumatische Kissen automatisch in Abhängigkeit des durch den Neigungssensor gemessenen Anstellwinkels des Flugzeugs aufgeblasen oder entleert wird.

Dadurch wird für einen Benutzer der Liege eine besonders komfortable Bedienung ermöglicht, da die Steuerungseinheit je nach gemessenem Anstellwinkel das mindestens eine erste pneumatische Kissen derart aufbläst oder entleert, dass eine im Wesentlichen horizontale Lage der Liegefläche ermöglicht wird. Alternativ kann über ein Bedienelement durch einen Benutzer auch eine gewünschte Lage der Liegefläche eingegeben werden, welche dann in Abhängigkeit des Anstellwinkels des Flugzeugs aktiv nachgeführt wird.

Alternativ bevorzugt ist die Steuerungseinheit derart ausgestaltet, dass das wenigstens eine erste pneumatische Kissen in Abhängigkeit der Flugphase automatisch aufgeblasen oder entleert wird.

Dies ermöglicht die automatische Einstellung diverser Lagen der Liegefläche je nach Flugphase. Insbesondere kann die Liegefläche im Steig-, Reise- oder Sinkflug automatisch in eine unterschiedliche Lage gebracht werden. Die Änderung der Flugphase kann beispielsweise über ein entsprechendes Eingabemittel durch das Flugpersonal an die Steuerungseinheit übermittelt werden.

Vorzugsweise ist die Liegefläche einstückig ausgebildet, wobei das wenigstens eine pneumatische Kissen unterhalb der Liegefläche angeordnet ist und auf deren Unterseite einwirkt.

Die Liegefläche ist vorzugsweise als Matratze ausgebildet, welche auf einer geeigneten Unterlage aufliegt, wobei zumindest unter einem Teilbereich der Liegefläche zwischen der Unterlage und der Liegefläche das mindestens eine pneumatische Kissen angeordnet ist. Eine derartige Konfiguration bietet den grösstmöglichen Komfort für einen Benutzer der Liege, da die Liegefläche als eine zusammenhängende Fläche ohne störende Übergänge zwischen Einzelteilen ausgestaltet ist.

Vorzugsweise ist das mindestens eine erste pneumatische Kissen derart angeordnet, dass sich dieses in Längsrichtung von einem ersten Ende bis im Wesentlichen in der Mitte der Liegefläche erstreckt und sich dieses erste Ende durch Aufblasen beziehungsweise Entleeren des wenigstens einen pneumatischen Kissens heben beziehungsweise senken lässt.

Dadurch lässt sich eine Hälfte der Liegefläche heben beziehungsweise senken, so dass z.B. der Oberkörper eines auf der Liegefläche liegenden Benutzers unabhängig vom Anstellwinkel des Flugzeugs in einer im Wesentlichen horizontalen Lage bringen lässt.

Bevorzugt umfasst das erfindungsgemässe Bett mindestens ein im aufgeblasenen Zustand keilförmiges zweites pneumatisches Kissen, welches derart angeordnet ist, dass sich dieses in Längsrichtung von einem zweiten Ende bis im Wesentlichen in der Mitte der Liegefläche erstreckt und sich dieses zweite Ende durch Aufblasen beziehungsweise Entleeren des mindestens einen zweiten keilförmigen pneumatischen Kissens heben beziehungsweise senken lässt.

Insbesondere in Kombination mit dem mindestens einen ersten pneumatischen Kissen kann die Liegefläche an beiden Enden angehoben beziehungsweise abgesenkt werden, wodurch eine individuelle Verstellung der Lage der beiden Enden der Liegefläche ermöglicht wird.

Vorzugsweise weist die Liege eine feste Unterlage auf, auf der die Liegefläche aufliegt. Die feste Unterlage umfasst einen ersten Bereich, der sich vom zweiten Ende der Liegefläche her bis im Wesentlichen in die Mitte der Liegefläche erstreckt, sowie einen zweiten Bereich, der sich vom ersten Ende her bis zum ersten Bereich hin erstreckt. Der erste Bereich ist derart ausgestaltet, dass dieser gegenüber einem Boden einer Flugzeugkabine einen Winkel aufweist, so dass sich vom zweiten Ende in Richtung der Mitte der Liegefläche eine ansteigende Fläche ergibt. Das mindestens eine pneumatische Kissen ist im zweiten Bereich zwischen der Unterlage und der Liegefläche angeordnet.

Insbesondere bevorzugt ist der zweite Bereich derart ausgestaltet, dass dieser eine Fläche bildet, welche im Wesentlichen parallel zum Boden der Flugzeugkabine steht. Weiter bevorzugt ist das mindestens eine erste pneumatische Kissen derart ausgestaltet, dass dieses im aufgeblasenen Zustand einen Keil ausbildet, der denselben Winkel zur festen Unterlage aufweist, wie der erste Bereich zum Kabinenboden. Durch diese Konfiguration ist es möglich, den im normalen Reiseflug auftretenden Anstellwinkel des Flugzeugs zu kompensieren, wobei durch Aufblasen des mindestens einen ersten pneumatischen Kissens die Liegefläche insgesamt im Wesentlichen in eine parallele Lage gebracht werden kann.

Gegenüber einer Liege, bei der die gesamte Unterlage parallel zum Kabinenboden steht hat diese Konfiguration den Vorteil, dass das mindestens eine pneumatische Kissen kleiner ausgestaltet sein kann, wobei trotzdem eine Kompensation des Anstellwinkels während des Reisefluges erfolgen kann.

Der Winkel des ersten Bereichs gegenüber dem Kabinenboden beträgt insbesondere bevorzugt 3°.

Besonders bevorzugt ist im ersten Bereich zwischen der festen Unterlage und der Liegefläche mindestens ein zweites, keilförmiges pneumatisches Kissen zwischen der festen Unterlage und der Liegefläche angeordnet.

Besonders bevorzugt weist die Unterlage einen im Längsschnitt dreieckigen Querschnitt auf, insbesondere in der Form eines gleichschenkligen Dreiecks, wobei die Basis des Dreiecks gegen den Kabinenboden des Flugzeugs gerichtet ist. Die Schenkel des Dreiecks bilden dabei den ersten und den zweiten Bereich der festen Unterlage. Das erste und das zweite pneumatische Kissen sind je zwischen einem der Bereiche sowie der Liegefläche angeordnet, wobei deren Form im aufgeblasenen Zustand derart gewählt ist, dass die gegen die Liegefläche gerichtete Seite parallel zum benachbarten Bereich liegt. Insbesondere bevorzugt weisen die Bereiche gegenüber der Basis einen Winkel auf, der dem üblichen Anstellwinkel eines Flugzeugs im Reiseflug entspricht, also typischerweise zwischen 1° und 5°. Alternativ kann der Winkel auch dem maximalen Anstellwinkel eines Flugzeugs im normalen Steig- oder Sinkflug entsprechen, vorzugsweise zwischen 5° und 15°.

Durch diese Anordnung kann durch selektives Aufblasen beziehungsweise Entleeren des ersten oder des zweiten pneumatischen Kissens eine horizontale Lage der Liegefläche eingehalten werden.

Vorzugsweise ist mindestens ein weiteres pneumatisches Kissen in horizontaler Richtung über dem wenigstens einen pneumatischen Kissen angeordnet.

Durch das Anordnen von weiteren pneumatischen Kissen auf dem mindestens einen keilförmigen pneumatischen Kissen lassen sich unterschiedliche Lagen der Liegefläche erzielen. Insbesondere kann durch Anordnung von im aufgeblasenen Zustand unterschiedlich geformten pneumatischen Kissen nicht nur eine horizontale Lage der Liegefläche trotz eines Anstellwinkels des Flugzeugs erzielt werden, sondern es können auch andere Lagen, bei denen z.B. ein Bereich des Teilbereichs der Liegefläche in einem anderen Winkel absteht, erzielt werden.

Bevorzugt weist das mindestens eine weitere pneumatische Kissen im aufgeblasenen Zustand eine Keilform auf, wobei die Steuerungseinheit derart ausgebildet ist, dass dieses mindestens eine weitere pneumatische Kissen in Abhängigkeit eines Anstellwinkels des Flugzeugs aufblasbar oder entleerbar ist.

Durch Aufeinanderschichten mehrere derartiger keilförmiger pneumatischer Kissen können durch selektives aufblasen beziehungsweise entleeren der aufeinandergeschichteten pneumatischen Kissen eine Vielzahl von Lagen der Liegefläche erzielt werden. Insbesondere können die Enden der Liegefläche auf unterschiedliche Positionen angehoben oder gesenkt werden, um beispielsweise unterschiedliche Anstellwinkel des Flugzeugs zu kompensieren, wobei die aufgeblasenen pneumatischen Kissen vorzugsweise stets vollständig aufgeblasen sind. Dadurch wird verhindert, dass sich durch ein nicht vollständig aufgeblasenes pneumatisches Kissen, bei welchem im Innenraum nur ein geringer Fluiddruck vorherrscht, sich ein für den Benutzer allenfalls unangenehm weicher oder federnder Teilbereich der Liegefläche ergibt.

Bei der Verwendung mehrerer pneumatischer Kissen weist die Liege besonders bevorzugt nur eine einzige Pumpe auf, welche mit jedem pneumatischen Kissen fluidisch in Verbindung gebracht werden kann und die sowohl zum aufblasen als auch zum entleeren der pneumatischen Kissen geeignet ist. Vorzugsweise ist zwischen der Pumpe und den pneumatischen Kissen ein Ventilblock angeordnet, der für jedes fluidische Kissen über ein Ventil verfügt, mit dem sich ein pneumatisches Kissen in fluidische Verbindung mit der Pumpe bringen lässt. Die Pumpe ist dabei über mindestens eine Zuleitung mit dem Ventilblock fluidisch verbunden. Die vereinfacht den Aufbau der erfindungsgemässen Liege.

Vorzugsweise weist das mindestens eine weitere pneumatische Kissen im aufgeblasenen Zustand eine beliebige polygonale Form auf.

Insbesondere bevorzugt weist das mindestens eine weitere pneumatische Kissen die Form eines Quaders auf. Dadurch kann der Teilbereich der Liegefläche auf eine beliebige Lage gebracht werden.

Vorzugsweise verfügt das mindestens eine Kissen über mindestens einen Drucksensor, mit dem der im Innern des mindestens einen pneumatischen Kissens vorhandene Druck des Fluids gemessen wird. Die Steuerungsvorrichtung ist ferner derart ausgestaltet, dass bei Überschreiten eines vordefinierten Maximaldrucks Fluid aus dem mindestens einen pneumatischen Kissen entleert wird, bis der vorbestimmte Maximaldruck erreicht wird.

Dadurch kann eine Beschädigung des mindestens einen pneumatischen Kissens durch einen zu hohen Fluiddruck zuverlässig verhindert werden, da die Steuerungsvorrichtung bei Überschreiten des vordefinierten Maximaldrucks automatisch Fluid aus dem mindestens einen pneumatischen Kissens entleert.

Vorzugsweise ist die Steuerungsvorrichtung zusätzlich derart ausgestaltet, dass bei Unterschreiten des vordefinierten Maximaldrucks Fluid in das mindestens eine pneumatische Kissen gepumpt wird, bis der Maximaldruck erreicht wird. Dadurch kann ein konstanter Druck innerhalb des mindestens einen pneumatischen Kissens eingehalten werden, womit sich dieses für einen Benutzer immer gleich hart anfühlt.

Als Drucksensor können alle einem Fachmann bekannten Drucksensoren eingesetzt werden, welche eine kontinuierliche Druckmessung ermöglichen. Unter "kontinuierliche Druckmessung" wird im Rahmen der vorliegenden Erfindung auch jede Messung verstanden, bei der der Druck nur zeitweise, jedoch in regelmässigen und kurzen Abständen gemessen wird, beispielsweise alle paar Mikrosekunden bis maximal alle 5 Sekunden.

Vorzugsweise ist der Drucksensor in oder an einer Zuleitung zum mindestens einen pneumatischen Kissen, beispielsweise zwischen einer Pumpe und dem mindestens einen pneumatischen Kissen, angeordnet.

Eine derartige kontinuierliche Druckmessung mit anschliessender Nachregelung des Druckes bei Über- oder Unterschreitung des vorbestimmten Maximaldrucks kann nicht nur im Rahmen der vorliegenden Erfindung verwendet werden, sondern kann auch bei anderen Anwendungen, bei denen ein pneumatisches Kissen eingesetzt wird, zum Einsatz gelangen. So kann eine derartige Regelung beispielsweise auch auf pneumatische Kissen, welche als Sitzfläche, Rückenlehne, Raumteiler, Unterlage, Liegefläche oder dergleichen eingesetzt werden, verwendet werden. Ganz allgemein können damit pneumatische Kissen in den unterschiedlichsten Einsatzgebieten ausgerüstet werden.

Der vorbestimmte Maximaldruck im Innern des mindestens einen pneumatischen Kissens des erfindungsgemässen Fahrzeugsitzes beträgt vorzugsweise 5 kPa (50 mbar). Je nach Einsatzzweck des pneumatischen Kissens können jedoch auch andere Maximaldrücke vorgesehen sein, wie beispielsweise 10 kPa (100 mbar) oder 1 kPa (10 mBar).

Besonders bevorzugt ist die Liege als Bett oder Divan ausgestaltet. Bei einem Einsatz als Bett besteht dieses ausschliesslich aus der erfindungsgemässen Liege. Im Unterschied hierzu umfasst ein Divan, welches im Allgemeinen einem Sofa gleicht, zusätzlich mindestens eine Rückenlehne sowie in der Regel Sitzgurte. Ein Divan kann demnach einerseits zum Sitzen und andererseits zum Liegen verwendet werden.

Die vorliegende Erfindung betrifft ferner ein Verfahren zum Verändern der horizontalen Lage zumindest eines Teilbereichs einer Liegefläche bei einer Liege in einem Flugzeug. Beim erfindungsgemässen Verfahren wird mindestens ein auf eine Teilbereich einer Liegefläche einwirkendes pneumatisches Kissen durch eine Steuerungseinheit aufgeblasen oder entleert.

Dadurch kann unabhängig des Anstellwinkels des Flugzeugs stets eine im Wesentlichen horizontale Lage der Liegefläche erreicht werden.

Vorzugsweise erfolgt das Aufblasen und Entleeren des wenigstens einen pneumatischen Kissens automatisch und in Abhängigkeit des Anstellwinkels des Flugzeugs durch die Steuerungseinheit.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b: Eine erste Ausführungsform einer erfindungsgemässen Liege;
- Fig. 2a, b: eine zweite Ausführungsform einer erfindungsgemässen Liege;
- Fig. 3: eine dritte Ausführungsform einer erfindungsgemässen Liege;
- Fig. 4: eine vierte Ausführungsform einer erfindungsgemässen Liege;

Grundsätzlich sind in den Figuren gleiche Teile mit gleichen Bezugszeichen versehen.

### Wege zur Ausführung der Erfindung

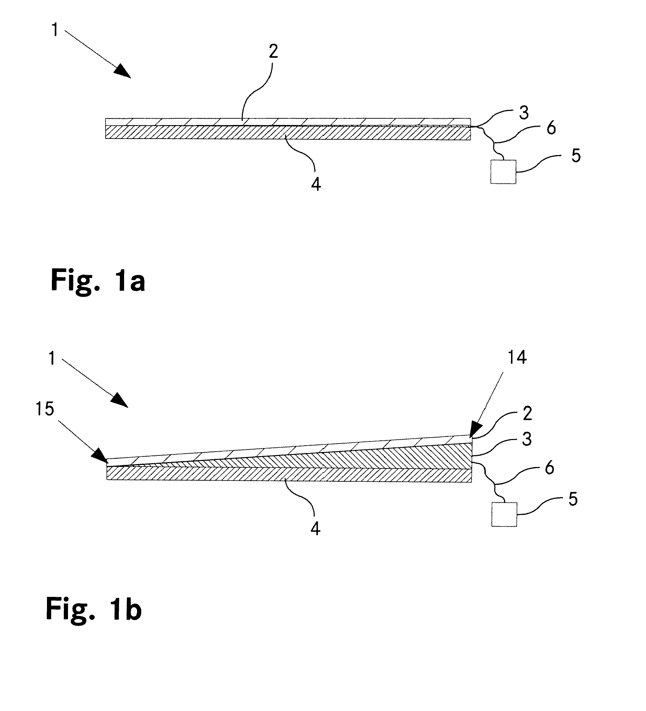

Die Fig. 1a, b zeigen eine erste Ausführungsform einer erfindungsgemässen Liege 1. In der Fig. 1a ist die Liege 1 in einer Konfiguration, bei der eine Liegefläche 2 parallel zu einer festen Unteralge 4 liegt, dargestellt. Die feste Unterlage 4 kann ein Gestell oder ein sonstiger Unterbau sein, der eine Befestigung der Liege 1 in einem Flugzeug, beispielsweise auf einem Kabinenboden, ermöglicht. Ein pneumatisches Kissen 3 ist zwischen der festen Unterlage 4 und der Liegefläche 2 angeordnet. Das pneumatische Kissen 3 ist über eine erste Zuleitung 6 mit einer Steuerungseinheit 5 verbunden.

Fig. 1b zeigt die Liege 1 der Fig. 1a mit aufgeblasenem, ersten pneumatischen Kissen 3. Das erste pneumatische Kissen 3 weist eine im Wesentlichen keilförmige Form auf, so dass ein erstes Ende 14 der Liegefläche 2 gegenüber einem zweiten Ende 15 durch Aufblasen des ersten pneumatischen Kissens 3 angehoben werden kann. Das Aufblasen und das Entleeren des ersten pneumatischen Kissens 3 erfolgt durch die Steuerungseinheit 5, welche über die erste Zuleitung 6 fluidisch mit dem ersten pneumatischen Kissen 3 verbunden ist.

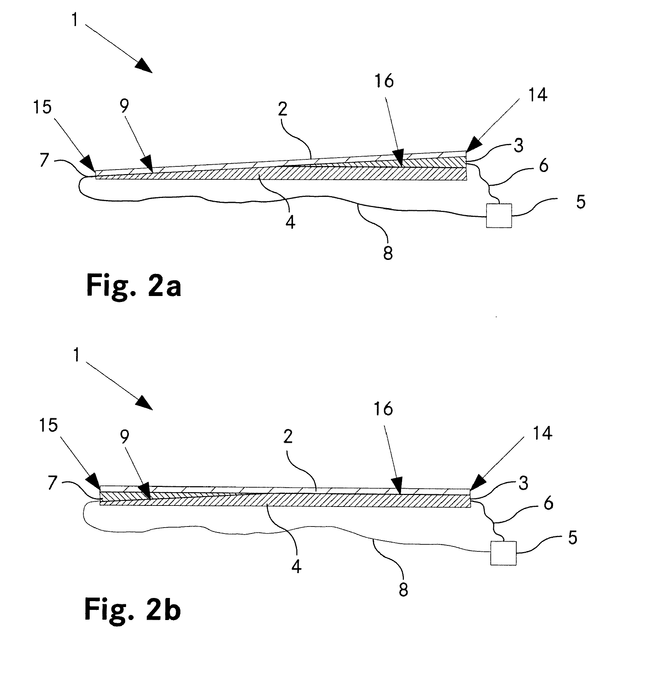

Die Fig. 2a, b zeigen eine zweite Ausführungsform einer erfindungsgemässen Liege 1. Bei dieser Ausführungsform weist die feste Unterlage 4 einen ersten Bereich 9 auf, der sich im Wesentlichen vom zweiten Ende 15 der Liegefläche 2 zu deren Mitte hin erstreckt. Dieser erste Bereich 9 weist gegenüber einem Kabinenboden beziehungsweise gegenüber einer Grundfläche der festen Unterlage 4 einen Winkel auf, so dass dieser erste Bereich 9 vom zweiten Ende 15 her in Richtung des ersten Endes 14 hin bis im Wesentlichen in der Mitte der Liegefläche 2 ansteigt. Typischerweise beträgt dieser Winkel 3°, so dass dieser dem im Reiseflug üblichen Anstellwinkel des Flugzeugs entspricht.

Das erste pneumatische Kissen 3 ist in einem zweiten Bereich 16 angeordnet, der sich vom ersten Ende 14 her in Richtung des zweiten Endes 15 bis im Wesentlichen zur Mitte der Liegefläche 2 hin, d.h. bis zum ersten Bereich 9 erstreckt. Das erste pneumatische Kissen 3 ist dabei derart ausgestaltet, dass durch vollständiges Aufblasen desselben die Liegefläche 2 eine durchgängige, ebene Fläche bildet, welche zum Kabinenboden in einem Winkel steht. So kann der Anstellwinkel des Flugzeugs ausgeglichen und eine im Wesentlichen horizontale Anordnung der Liegefläche 2 erzielt werden.

Die Fig. 2b zeigt die erfindungsgemässe Liege 1 der Fig. 2a in einer weiteren Konfiguration, welche beispielsweise im Sinkflug oder während Operationen auf dem Rollfeld eingenommen werden kann. Ein zweites pneumatisches Kissen 7, welches im ersten Bereich 9 zwischen der festen Unterlage 4 und der Liegefläche 2 angeordnet ist, ist dabei vollständig aufgeblasen, während das erste pneumatische Kissen 3 vollständig entleert ist. Das zweite pneumatische Kissen 7 ist dabei derart ausgestaltet, dass eine Oberfläche desselben im vollständig aufgeblasenen Zustand mit dem zweiten Bereich 16 eine ebene Fläche bildet, so dass die aufliegende Liegefläche 2 im Wesentlichen parallel zum Kabinenboden ist. Das zweite pneumatische Kissen 7 ist über eine zweite Zuleitung 8 mit der Steuerungseinheit 5 verbunden.

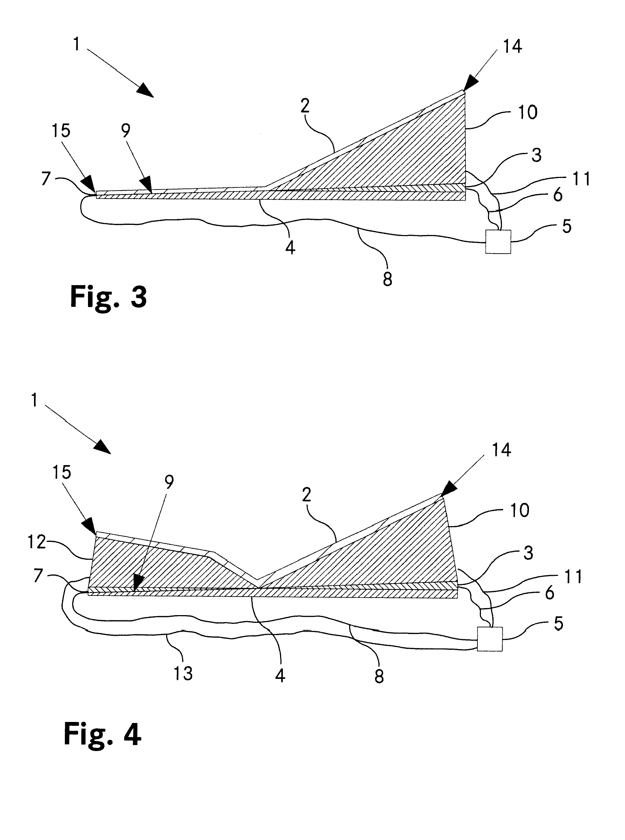

Auf der Fig. 3 ist eine weitere Ausführungsform einer erfindungsgemässen Liege 1 dargestellt. Diese Ausführungsform entspricht im Wesentlichen der Ausführungsform der Fig. 2, wobei auf dem ersten pneumatischen Kissen 3 ein weiteres, drittes pneumatisches Kissen 10 angeordnet ist. Durch Aufblasen des dritten pneumatischen Kissens 10 lässt sich das erste Ende 14 der Liegefläche zusätzlich anheben, beispielsweise um eine bequeme Leseposition einnehmen zu können. Das dritte pneumatische Kissen 10 ist über eine dritte Zuleitung 11 mit der Steuerungseinheit 5 verbunden.

Die Fig. 4 zeigt eine weitere Ausführungsform einer erfindungsgemässen Liege 1. Im Wesentlichen entspricht diese Ausführungsform der Ausführungsform der Fig. 3. Zusätzlich weist die Liege 1 in dieser Ausführungsform ein viertes pneumatisches Kissen 12 auf, welches oberhalb des zweiten pneumatischen Kissens 7 angeordnet ist. Durch Aufblasen dieses vierten pneumatischen Kissens 12 lässt sich das zweite Ende 15 der Liegefläche weiter anheben. Zudem ist das vierte pneumatische Kissen 12 derart geformt, dass sich eine "Relax" Position einnehmen lässt, bei der zusätzlich der Bein- und Fussbereich der Liegefläche 2 ergonomisch geformt angehoben werden kann. Das vierte pneumatische Kissen 12 ist über eine vierte Zuleitung 13 mit der Steuerungseinheit 5 verbunden.

## Patentansprüche

1. Liege zum Einsatz in einem Flugzeug umfassend eine Liegefläche (2) sowie wenigstens ein im aufgeblasenen Zustand keilförmiges erstes pneumatisches Kissen (3), welches auf zumindest einen Teilbereich der Liegefläche (2) einwirkt, **dadurch gekennzeichnet, dass** die Liege (1) eine Steuerungseinheit (5) aufweist, mit der das wenigstens eine erste pneumatische Kissen (3) aufblasbar und entleerbar ist.

2. Liege gemäss Anspruch 1, **dadurch gekennzeichnet, dass** die Steuerungseinheit (5) über mindestens einen Neigungssensor verfügt und derart konfiguriert ist, dass das wenigstens eine erste pneumatische Kissen (3) automatisch in Abhängigkeit des durch den Neigungssensor gemessenen Anstellwinkels des Flugzeugs aufgeblasen oder entleert wird.

3. Liege gemäss Anspruch 1, **dadurch gekennzeichnet, dass** die Steuerungseinheit derart ausgestaltet ist, dass das wenigstens eine ersten pneumatischen Kissen (3) in Abhängigkeit der Flugphase automatisch aufgeblasen oder entleert wird.

4. Liege gemäss einem der Ansprüche 1 bis 3, **dadurch gekennzeichnet, dass** die Liegefläche (2) einstückig ausgebildet ist und das wenigstens eine erste pneumatische Kissen (3) unterhalb der Liegefläche (2) angeordnet ist und auf deren Unterseite einwirkt.

5. Liege gemäss einem der Ansprüche 1 bis 4, **dadurch gekennzeichnet, dass** das wenigstens eine erste pneumatische Kissen (3) derart angeordnet ist, dass sich dieses in Längsrichtung von einem ersten Ende (14) bis im Wesentlichen in der Mitte der Liegefläche (2) erstreckt und sich dieses erste Ende (14) durch Aufblasen beziehungsweise Entleeren des wenigstens einen ersten pneumatischen Kissens (3) heben beziehungsweise senken lässt.

6. Liege gemäss Anspruch 5, **dadurch gekennzeichnet, dass** die Liege (1) mindestens ein im aufgeblasenen Zustand keilförmiges zweites pneumatisches Kissen (7) umfasst, welches derart angeordnet ist, dass sich dieses in Längsrichtung von einem zweiten Ende (15) bis im Wesentlichen in der Mitte der Liegefläche (2) erstreckt und sich dieses zweite Ende (15) durch Aufblasen beziehungsweise Entleeren des mindestens einen zweiten pneumatischen Kissens (7) heben beziehungsweise senken lässt.

7. Liege gemäss einem der Ansprüche 5 oder 6, **dadurch gekennzeichnet, dass** die Liege (1) eine feste Unterlage (4) aufweist, auf der die Liegefläche (2) aufliegt, wobei die feste Unterlage (4) einen ersten Bereich (9), der sich vom zweiten Ende (15) her bis im Wesentlichen in die Mitte der Liegefläche (2) erstreckt, sowie einen zweiten Bereich (16), der sich vom ersten Ende (14) her bis zum ersten Bereich (9) hin erstreckt, aufweist, wobei der erste Bereich (9) zur Grundfläche der festen Unterlage (4) einen Winkel aufweist, so dass sich vom zweiten Ende (15) in Richtung der Mitte der Liegefläche (2) eine ansteigende Fläche ergibt und wobei das mindestens eine erste pneumatische Kissen (3) im zweiten Bereich (16) zwischen der festen Unterlage (4) und der Liegefläche (2) angeordnet ist.

8. Liege gemäss einem der Ansprüche 1 bis 7, **dadurch gekennzeichnet, dass** mindestens ein weiteres pneumatisches Kissen (10, 12) in horizontaler Richtung über dem wenigstens einen ersten pneumatischen Kissen (3) und/oder zweiten pneumatischen Kissen (7) angeordnet ist.

9. Liege gemäss Anspruch 8, **dadurch gekennzeichnet, dass** das mindestens eine weitere pneumatische Kissen (10, 12) im aufgeblasenen Zustand eine Keilform aufweist und die Steuerungseinheit (5) derart ausgebildet ist, dass dieses mindestens eine weitere pneumatische Kissen (10, 12) in Abhängigkeit des Anstellwinkels des Flugzeugs aufgeblasen oder entleert werden kann.

10. Liege gemäss Anspruch 8, **dadurch gekennzeichnet, dass** das mindestens eine weitere pneumatische Kissen (10, 12) im aufgeblasenen Zustand eine beliebige polygonale Form aufweist.

11. Liege gemäss einem der Ansprüche 1 bis 10, **dadurch gekennzeichnet, dass** das mindestens eine pneumatische Kissen (3) über mindestens einen Drucksensor verfügt, mit dem der im Innern des mindestens einen pneumatischen Kissens (3) vorhandene Druck des Fluids gemessen wird, wobei die Steuerungsvorrichtung derart ausgestaltet ist, dass bei Überschreiten eines vordefinierten Maximaldrucks Fluid aus dem mindestens einen pneumatischen Kissen (3) entleert wird, bis der vorbestimmte Maximaldruck erreicht wird.

12. Liege gemäss einem der Ansprüche 1 bis 11, **dadurch gekennzeichnet, dass** die Liege (1) als Bett oder Divan ausgestaltet ist.

13. Verfahren zum Verändern der horizontalen Lage zumindest eines Teilbereichs einer Liegefläche (2) bei einer Liege (1) in einem Flugzeug, **dadurch gekennzeichnet, dass** wenigstens ein im aufgeblasenen Zustand keilförmiges erstes pneumatisches Kissen (3), welches auf den zumindest einen Teil der Liegefläche (2) einwirkt, durch eine Steuerungseinheit (5) aufgeblasen oder entleert wird.

14. Verfahren gemäss Anspruch 13, **dadurch gekennzeichnet, dass** das Aufblasen und Entleeren des wenigstens einen pneumatischen Kissens automatisch und in Abhängigkeit des Anstellwinkels des Flugzeugs durch die Steuerungseinheit erfolgt.
